(19)

Europäisches Patentamt

European Patent Office

Office européen des brevets

(11) **EP 2 666 997 A1**

(12) **EUROPEAN PATENT APPLICATION**

(43) Date of publication:
**27.11.2013 Bulletin 2013/48**

(21) Application number: **12169557.1**

(22) Date of filing: **25.05.2012**

(51) Int Cl.:
*F02D 41/00* (2006.01)    *F02M 25/08* (2006.01)
*B60K 15/035* (2006.01)    *F01P 5/02* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Inergy Automotive Systems Research (Société Anonyme)**
**1120 Bruxelles (BE)**

(72) Inventors:
• **Hill, David**
**Oakland, MI 48382 (US)**
• **Criel, Bjorn**
**1750 Sint-Martens-Lennik (BE)**
• **Chaussinand, Antoine**
**1020 Bruxelles (BE)**

(74) Representative: **Descazeaux, Charles et al**
**Cabinet Lhermet La Bigne & Remy**
**11, boulevard de Sébastopol**
**75001 Paris (FR)**

(54) **Method for detecting a presence or absence of a leak in a fuel system**

(57) It is proposed a method for detecting a presence of a leak in a fuel system mounted on board of a vehicle. The method is such that it comprises the steps of:
a) obtaining (S1,S6) temperatures and pressures in the fuel system at a first time and at a second later time;
b) calculating (S8) a pressure expected in the fuel system at the second time, on the basis of at least one of the temperatures and pressures obtained at the first and second times, and a coefficient that represents the natural evolution of pressure in the fuel system over time;
c) detecting (S9) a leak by comparing the calculated expected pressure and the pressure obtained at the second time to at least one predetermined threshold.

FIGURE 2

EP 2 666 997 A1

**Description**

The present invention relates generally to evaporative emission control systems that are used in automotive vehicles to control the emission of volatile fuel vapors. In particular, the invention relates to an on-board diagnostic method for detecting a presence or absence of a leak in a fuel system mounted on board of a vehicle. The vehicle may be a plug-in hybrid vehicle.

Applicable regulations require the monitoring of the vehicle's evaporative emission system to ensure integrity of the fuel system (i.e. checking that there is no breach in the fuel system).

Existing techniques for detecting a presence or absence of leak in a fuel system use measurements of pressure and temperature internal to the fuel system. US patent No.7,448,367 discloses a technique for evaluating the integrity of a fuel system based on the comparison of the fuel tank pressure and temperature at vehicle start-up with the fuel tank pressure and temperature at the previous vehicle shut down. According to this known technique, fuel vapour leakage from the fuel system is detected when a measured increase in temperature fails to produce a corresponding increase in pressure. This type of leak test may detect "small leaks" and "large leaks", however, it is believed that many parameters influence the accuracy of this test.

Certain variable ambient conditions are either more or less of an influence on the test accuracy. Atmospheric pressure and temperature are two such influences.

The fuel system comprises a plurality of closing elements (i.e. valves). The leak tightness of these closing elements is subject to change due to aging, temperature variations, etc. In the present document, it is called "natural leakage rate" the quantity of air/fuel vapour mixture leaving or entering the fuel system per unit of time, thru the closing elements. In other words, the "natural leakage rate" is the loss of pressure over time (i.e. decrease of pressure in the case of positive pressure and increase of pressure in the case of negative pressure).

This natural leakage rate can cause a pressure measurement based leak detection system (like the one disclosed in US patent No.7,448,367) to make faulty diagnosis. This is a serious problem.

What is needed is an improved method for detecting a leak in a fuel system that is more accurate than prior art techniques. It is an object of one embodiment of the invention to provide an alternative leak detection method that avoids erroneous detection or non-detection of leaks.

To this end, the invention proposes a method for detecting a presence or absence of a leak in a fuel system, in accordance with claim 1. The present leak test consists in comparing a pressure obtained (for example, measured) at a predetermined time (i.e. second time) with an estimation of the pressure expected in the fuel system at this predetermined time. Advantageously, the expected pressure is calculated in a very accurate manner. Indeed, according to the invention the expected pressure is calculated by taking into account the natural evolution of pressure in the fuel system over time. In a preferred embodiment, the expected pressure is calculated by using the temperature and pressure obtained at the first time, the temperature obtained at the second later time, and a coefficient that represents the natural evolution of pressure in the fuel system over time. Temperatures at first and/or second time can be measured or calculated based, for example, on a predetermined heat transfer model.

In a particular embodiment, the predetermined threshold can be set to zero. In this particular embodiment, the measured pressure (i.e. pressure measured at the second time) can be directly compared to the calculated expected pressure. In this example of configuration, if the measured pressure is different form the calculated expected pressure, it is concluded that there is a leak.

In another embodiment, the measured pressure (i.e. pressure measured at the second time) can be compared to the calculated expected pressure, and the result of this comparison can be compared to one (or more) predetermined thresholds.

In yet another embodiment, each of the measured pressure (i.e. pressure measured at the second time) and the calculated expected pressure can be compared to two thresholds. This particular embodiment is described later in this document with respect to figure 2.

In an advantageous embodiment, the coefficient is set as a function of at least one of the following data:

- a natural leakage rate;
- a Reid Vapor Pressure value;
- an atmospheric pressure value.

In the present document, it is called "natural leakage rate" the quantity of air/fuel vapour mixture leaving or entering the fuel system per unit of time, thru the closing elements. In other words, the "natural leakage rate" is the loss of pressure over time (i.e. decrease of pressure in the case of positive pressure and increase of pressure in the case of negative pressure).

In a particular embodiment of the invention, the natural leakage rate and the Reid Vapor Pressure value (RVP) are obtained from theoretical and/or experimental models (curves, tables, matrices,...).

In a particular embodiment of the invention, the atmospheric pressure value is measured by means of a specific pressure sensor mounted on board of the vehicle. On most vehicles the atmospheric pressure is already taken in the air intake manifold and can thus be taken during vehicle start-up and/or shut-down, or for example, at a predetermined time after vehicle shut-down.

In an advantageous embodiment, the expected pressure is calculated when the value of the pressure at the second time lies inside a first predetermined range of pressure values. If this condition is verified, it is checked whether the value of the calculated expected pressure lies outside a second predetermined range of pressure values.

Here the idea is to define ranges of pressure values indicative of a possible absence of pressure within the fuel system. With such configuration, it is possible to generate an information of positive detection of leak when the measured pressure indicates that there is a possible absence of pressure in the fuel system (i.e. the measured pressure lies inside the first predetermined range) while the calculated expected pressure indicates that there should be a presence of pressure in the fuel system (i.e. the calculated expected pressure lies outside the second predetermined range).

In a particular embodiment, the first and second predetermined ranges are identical.

In another particular embodiment, the first and second predetermined ranges are different. For example, the first predetermined range can be set between +15mbar and -15mbar, and the second predetermined range can be set between +18mbar and -18mbar. Thus, in this particular embodiment the accuracy of the estimation can be taken into account.

Advantageously, the method comprises a step of detecting an absence of a leak when the value of the pressure at the second time lies outside the first predetermined range of pressure values.

Thus, the present invention proposes a quick no leak test based on the analysis of only one measurement of pressure (i.e. the pressure measured at the second later time). The idea behind the present invention is to determine the integrity (i.e. absence of leak) of the fuel system by detecting the effective presence of a pressure (positive or negative pressure) within the fuel system. The present invention proposes to detect the effective presence of a pressure inside the fuel system by detecting whether the value of the pressure measured at the second later time lies outside a predetermined range of pressure values. In a preferred embodiment, the predetermined range comprises upper and lower limits which are set as a function of the degradation introduced by a predetermined noise into the measurement. In a particular embodiment of the invention, the upper and lower limits are set as a function of the measurement accuracy of the pressure sensor that is in charge of measuring the pressure at the second later time. In another particular embodiment of the invention, the electronic noise of the vehicle is taking into account for the adjustment of the upper and lower limits. In yet another particular embodiment of the invention, the noise introduced by the measurement acquisition chain (comprising means for controlling the pressure sensor, means for processing data provided by the pressure sensor,...) is taking into account for the adjustment of the upper and lower limits. In other words, the resolution of the complete data acquisition chain of the pressure measurement is taking into account for the adjustment of the upper and lower limits.

Advantageously, when it is detected an absence of a leak, the method comprises a step of calibrating the natural leak rate by use of said temperatures and pressures at the first and second times.

Generally, the test for determining the presence or absence of leak in a fuel system is to be performed over a predetermined period of time. In the present invention, since the test for detecting an absence of leak is performed quickly at the beginning of this predetermined period of time, it is possible to use the remaining time of this predetermined period of time, for example, for performing additional processing or to increase the in-use monitor performance ratio. In a particular embodiment, it is proposed to use this remaining time for calibrating the natural leakage rate. A continuous calibration of the natural leakage rate improves the precision of the calculated expected pressure. Such continuous calibration permits to take into account the change over time of the leak tightness of the closing elements.

In an advantageous embodiment, when the value of the calculated expected pressure lies inside the second predetermined range of pressure values, the method comprises the steps of:

- adding energy (S10) into the fuel system;
- selecting a first pressure and/or a first temperature from among a first plurality of pressures and/or temperatures, as a function of a first predetermined condition relative to a variation of pressure and/or temperature;
- selecting a second pressure and/or a second temperature from among the first plurality of pressures and/or temperatures, as a function of the first predetermined condition;
- comparing (S11,S12) the first and second pressures and/or temperatures to determine whether there is a leak.

For example, the first predetermined condition may be a positive detection of a time period during which the variation of temperature ($\Delta T$) inside the fuel system is greater than or equal to 2°C.

In a particular embodiment, energy is added by using means already present on board the vehicle for other purposes. Advantageously, the integrity (absence of leak) of the fuel system can be determined by comparing a first pair of data (for example, first pressure and temperature obtained by measurement or calculation) with a second pair of data (for example, second pressure and temperature obtained by measurement or calculation). In an advantageous embodiment, this determination can be made without using the engine or a dedicated device generating heat and/or pressure but instead, by using such heat/pressure source available on the vehicle. For example, the fuel pump can be powered so as to heat and stir fuel in the fuel tank thereby adding energy (heat and/or pressure) to the fuel.

In another particular embodiment, energy is added by using an electrically powered heater. For example, the heater of a SCR system can be powered.

In an advantageous embodiment, when it is detected an absence of a leak, the method comprises the steps of:

- detecting (S14) predetermined operating condition(s) of the fuel system;
- selecting a third pressure and/or a third temperature from among a second plurality of pressures and/or temperatures, as a function of a second predetermined condition relative to a variation of pressure and/or temperature;
- selecting a fourth pressure and/or a fourth temperature from among the second plurality of pressures and/or temperatures, as a function of the second predetermined condition;
- calibrating (S15) the Reid Vapor Pressure value by use of:

    o the third and fourth pressures and/or temperature(s); and
    o a data relative to the vehicle fuel consumption.

For example, the second predetermined condition may be a positive detection of a time period during which the variation of temperature (ΔT) inside the fuel system is greater than or equal to 3°C.

According to the invention, the Reid Vapor Pressure (RVP) may be calculated by using the following equation:

$$\text{RVP} = \frac{\dfrac{P_{4c} - P_3}{(T_4 - T_3)*10}}{\dfrac{T}{a_1}} - \frac{(b_2 - b_1)*T}{\dfrac{1}{a_2}} + b_2 \qquad (1)$$

where:

P3 is the third pressure;
T3 is the third temperature;
P4 is the fourth pressure;
P4c is the pressure based on P4 and corrected by the change of vapour dome volume due to fuel consumption with the following equation: P4c = P4 * (Volume of vapour dome at the time at which the third pressure has been measured) / (Volume of vapour dome at the time at which the fourth pressure has been measured)
T4 is the fourth temperature;
L3 is the fuel volume measured at the time at which the third pressure has been measured;
L4 is the fuel volume measured at the time at which the fourth pressure has been measured.

The following variables may be calculated:

T= (T3+T4)/2 ; T is the average temperature during RVP calculation
L= (L3+L4)/2; L is the average fuel volume during RVP calculation

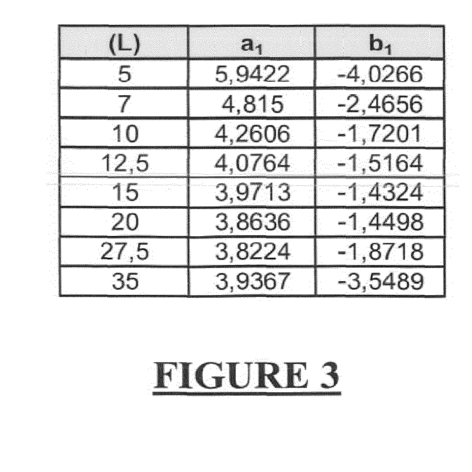

In a particular embodiment, a1, b1, a2, b2 are defined by a lookup table (or can be given by a formula) in function of L for different T step. Figure 3 shows an example of a lookup table. This lookup table is defined as a function of the fuel system design.

In one preferred embodiment, the first time is at an occasion of vehicle shut down and the second time is the next occasion of vehicle start-up.

In a particular embodiment, the vehicle is a plug-in hybrid vehicle.

Another embodiment of the present invention further relates to a fuel system comprising a fuel tank, a temperature sensor, a pressure sensor and a processor. The temperature sensor and the pressure sensor are arranged to measure conditions inside the fuel tank and are operatively connected to the processor. The processor is configured such that it can carry out the method for detecting a leak as described above.

Another embodiment of the present invention further relates to a motor vehicle comprising a fuel system as described above.

In another embodiment, the invention further relates to a computer-readable storage means storing a computer program for use in a fuel system as described above and containing a set of instructions executable by a computer for implementing the method for detecting a leak as described above (in any one of its different embodiments).

These and other aspects and advantages of embodiments of the invention will be further clarified with respect to the accompanying figures, given by way of an indicative and non-restrictive example, and in which:

Figure 1 illustrates a fuel system according to one embodiment of the invention; and

Figure 2 presents a particular embodiment of an algorithm for detecting an absence of a leak in the fuel system of figure 1.

Figure 3 presents a particular embodiment of a lookup table used for calculating parameters of the RVP equation (1) (described above).

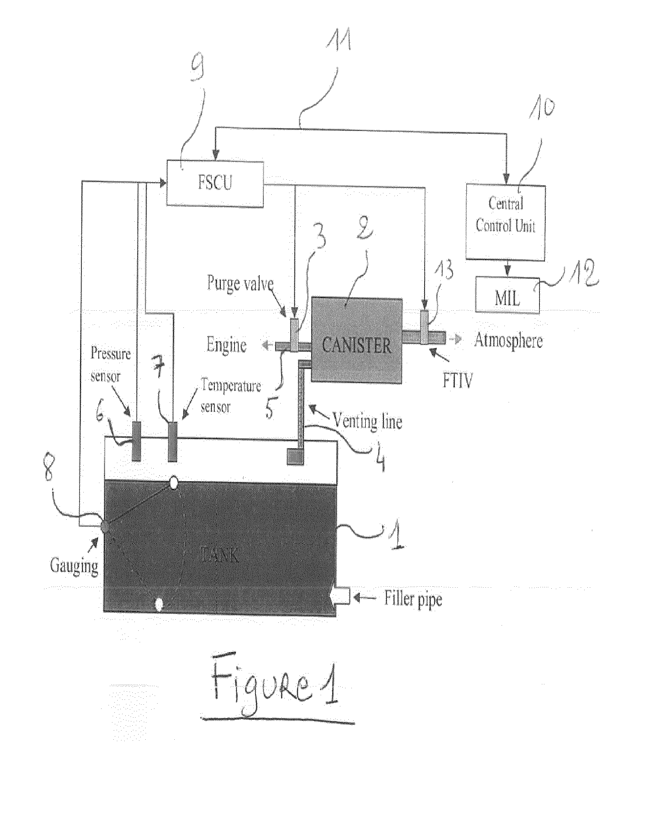

Figure 1 illustrates a fuel system according to a particular embodiment of the invention. The fuel system comprises a fuel tank 1 that is in fluid communication with a charcoal canister 2 via fluid line 4 (also called venting line). The charcoal canister 2 has another fluid line 5 connected to the intake manifold of the internal combustion engine (not shown). A valve 3 (also called purge valve) is disposed in the fluid line 5 to allow for selective communication between the charcoal canister 2 and the intake manifold (not shown). There is an additional communication between the charcoal canister 2 and the atmosphere.

This communication can be selectively controlled via a valve 13 (also called fuel tank isolation valve or FTIV) to create a completely sealed fuel system.

In a preferred embodiment of the invention, the purge valve 3 and the FTIV valve 13 are both opened when the internal combustion engine is operated and allows for a canister purging mode. The purge valve 3 is closed and the FTIV valve 13 is opened when the vehicle is being refueled by the addition of gasoline to the fuel tank 1. The purge valve 3 and the FTIV valve 13 are both closed when the internal combustion engine is operated and the canister is not purged, or when the engine is not operated (vehicle parked). Further, in the case of a hybrid vehicle, the purge valve 3 and the FTIV valve 13 are both closed when the vehicle is operated solely under battery power.

An additional valve (not pictured) could be disposed in the fluid line 4 for isolating the tank 1 from the canister 2 to avoid unwanted fuel vapour suction inside the air intake manifold during the canister purge mode. In this case the valve (not pictured) would ideally be open during the test, in order to test the complete system.

The fuel system further comprises a pressure sensor 6 adapted for measuring the pressure inside the fuel tank 1. For example, the pressure sensor 6 is adapted to measure pressure comprised within a working range of pressure. For example this could be a range of -30mbar to +30mbar for the fuel system in a conventional internal combustion vehicle, or -150mbar to +350mbar in a plug-in hybrid vehicle. In a particular embodiment, the pressure sensor 6 can be an absolute pressure sensor. In another particular embodiment, the pressure sensor 6 can be a relative pressure sensor. In this last embodiment, an absolute pressure can be predicted by combining the measurement of the relative pressure sensor with the atmospheric pressure measured at vehicle start-up and shutdown.

The fuel system further comprises a temperature sensor 7 adapted for measuring the temperature inside the fuel tank 1. The fuel system further comprises a float-type fuel level sensor 8 adapted for measuring the fuel level inside the fuel tank 1. The sensors are used in this invention for diagnostic purposes.

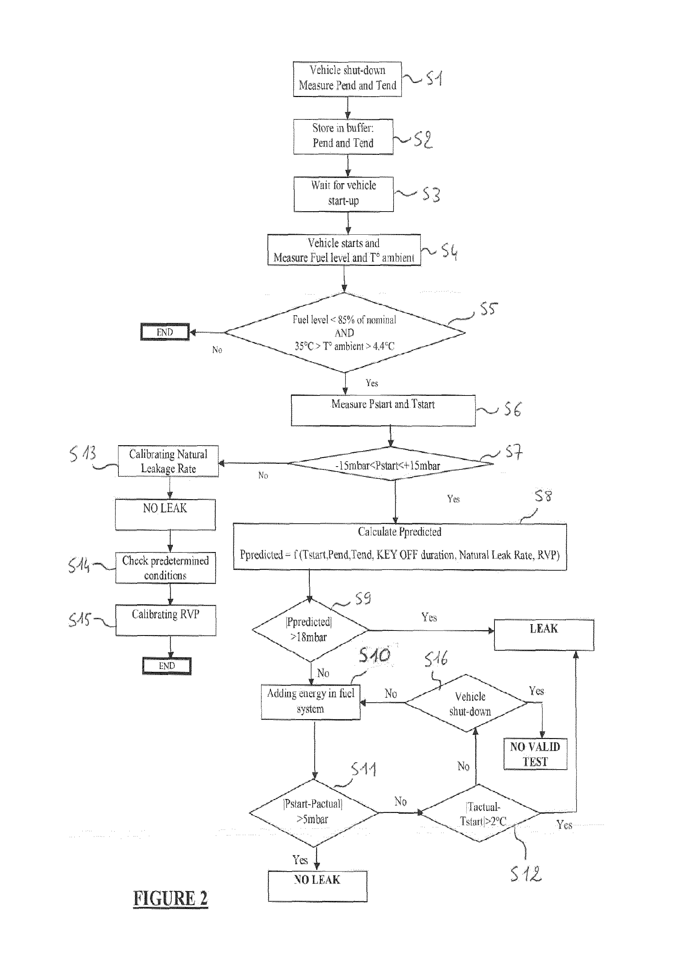

Advantageously, a Fuel System Control Unit (FSCU) 9 is configured to execute an algorithm (described hereafter in relation with figure 2) for processing temperatures and pressures measured by the pressure sensor 6 and the temperature sensor 7, in order to detect whether there is a leak in the fuel system of figure 1. The FSCU communicates with a Central Control Unit 10 (i.e. an engine control unit (ECU)) via of a communication bus 11. The Central Control Unit is in charge of activating a Malfunction Indicator Light 12 (MIL) on the dashboard of the vehicle when operation problem is detected. The Central Control Unit activates the MIL 12 when a leak is detected.

In another embodiment the leak test can be executed by the Central Control Unit, or another existing Control Unit (i.e. microprocessor) on the vehicle.

Figure 2 shows a flow chart which illustrates the algorithm (on-board diagnostic) executed by the FSCU 9 for detecting a presence/absence of a leak in the fuel system of figure 1.

At step S1, the vehicle shuts-down (i.e. engine off). Then, the FSCU 9 reads the fuel tank pressure Pend measured by the pressure sensor 6 and the fuel tank temperature Tend measured by the temperature sensor 7. At step S2, the FSCU 9 stores in a memory (or buffer) the fuel tank pressure Pend and temperature Tend measured at vehicle shut-down (i.e. first time).

At step S3, the FSCU 9 waits for a vehicle start-up event (i.e. key on).

At step S4, the vehicle starts and the FSCU 9 receives a set of information comprising the fuel level in the tank measured by the fuel level sensor 8 and the ambient temperature measured by a temperature sensor mounted on-board the vehicle.

At step S5, the FSCU 9 performs a test which consists in:

- determining whether the fuel level in the tank is lower than a predetermined threshold level. For example, this threshold level can be set such that it corresponds to 85% of the nominal filling volume of the tank; and
- determining whether the ambient temperature lies inside a predetermined range of temperature. For example, this predetermined range of temperature has an upper limit set at 35°C and a lower limit set as 4,4°C.

If the answer to test S5 is "no"; i.e. if the fuel level in the tank is, for example, greater than a level corresponding to 85% of the nominal filling volume of the tank, or if the ambient temperature is, for example, greater than 35°C or lower than 4,4°C; it is concluded that conditions are not suitable for a leak test and the algorithm is stopped until the next occasion of a vehicle shut down. When the vehicle shuts-down, the FSCU 9 executes step S1 (described above).

On the other hand, if the answer to test S5 is "yes"; i.e. if the fuel level in the tank is, for example, lower than or equal to a level corresponding to 85% of the nominal filling volume of the tank, and if the ambient temperature is, for example, lower than or equal to 35°C and greater than or equal to 4,4°C; the FSCU 9 obtains (at step S6) the fuel tank pressure Pstart and temperature Tstart measured at vehicle start-up (i.e. second later time) by the pressure sensor 6 and the temperature sensor 7, respectively. Then the FSCU 9 executes step S7 (described hereafter).

At step S7, the FSCU 9 performs a test which consists in determining whether the value of the fuel tank pressure Pstart lies inside a first predetermined range of pressure values indicative of a possible absence of pressure within the fuel system. The upper and lower limits of this first range of pressure values can be set as a function of a predetermined noise. In a particular embodiment, the upper and lower limits are set as a function of the measurement accuracy of the pressure sensor 6. In another embodiment, the upper and lower limits are further set as a function of the electronic noise of the vehicle. For example, in the case of a hybrid vehicle, the pressure sensor 6 can be configured to measure pressure comprised within the working range of -150mbar to +350mbar. Considering, the measurement accuracy of the pressure sensor 6, for example 1% of the working range, and the electronic noise of the vehicle, the upper and lower limits are set at +15mbar and -15mbar, respectively. In the case of a fuel system of a conventional vehicle having a working range of between -30mbar and +30mbar, the limits could be set at a lower value, for example the upper and lower limits could be set at +5mbar and -5mbar.

If the answer to test S7 is "yes"; i.e. if the value of the fuel tank pressure Pstart is, for example, lower than +15mbar and greater than -l5mbar (i.e. if - 15mbar <Pstart<+15mbar), it is detected that there is a possible absence of pressure within the fuel system. Then the FSCU 9 obtains a predetermined coefficient "C" that represents the natural evolution of pressure in the fuel system over time. For example, the predetermined coefficient can be stored in a memory. The predetermined coefficient is set as a function of at least one of the following data:

- a natural leakage rate;
- a Reid Vapor Pressure value;
- an atmospheric pressure value.

As already mentioned above, the natural leakage rate and the Reid Vapor Pressure value (RVP) can be obtained from theoretical and/or experimental models (curves, tables, matrices,...).

For example, the natural leakage rate can vary between 0.1mL/min up to 10mL/min, and typically between 1mL/min and 3mL/min. For example, the RVP value can vary between 5 and 16.

In most recent vehicles, the atmospheric pressure information is available and is updated in real time.

Once obtaining the predetermined coefficient, the FSCU 9 calculates (at step S8) an expected pressure Ppredicted which is the expected pressure in the fuel system at vehicle start-up time. According to a preferred embodiment of the present invention, the expected pressure Ppredicted is calculated as a function of the fuel tank temperature Tend, the fuel tank pressure Pend, the fuel tank temperature Tstart and the predetermined coefficient "C". The expected pressure Ppredicted can be predicted by using the following equation:

$$\text{Ppredicted} = [(\text{Pend}.\text{Tstart})/\text{Tend}]C$$

Then, at step S9, the FSCU 9 performs a test which consists in determining whether the value of the calculated expected pressure Ppredicted lies outside a second predetermined range of pressure values indicative of a possible absence of pressure within the fuel system. For example, the upper and lower limits of this second range of pressure values are set at +18mbar and -18mbar, respectively.

If the answer to test S9 is "yes"; i.e. if the value of the calculated expected pressure Ppredicted is, for example, greater than or equal to +18mbar, or lower than or equal to -18mbar, it is concluded that there is a leak. Then, the FSCU 9 sends a signal of positive leak detection to the CCU 10, and the CCU 10 activates the MIL 12.

On the other hand, if the answer to test S9 is "no"; i.e. if the value of the calculated expected pressure Ppredicted is, for example, lower than +18mbar and greater than -18mbar, it is not possible to conclude with certainty whether there is a leak. In this case, a predetermined amount of heat and/or pressure (i.e. energy) is introduced to the fuel tank.

In a particular embodiment, this predetermined amount of heat and/or pressure can be generated by using dedicated components.

In another particular embodiment, this predetermined amount of heat and/or pressure can be generated by using components already present on board the vehicle for other purposes. Generally, the fuel system comprises a fuel pump in charge of delivering fuel to the intake manifold 3. A control strategy would be implemented to close the fuel injectors on the engine intake and send power to the fuel pump causing it to heat up.

Based on the pressure rise due to the addition of heat and turbulence, it can be determined if the fuel system has a leak or not. In a particular embodiment, at step S10, the FSCU 9 obtains the fuel tank pressure Pactual and temperature Tactual measured at a time after the introduction of energy in the fuel tank. At step S11, the FSCU 9 may perform the following pressure-based test (given as an example for illustrative purpose):

$$|Pstart - Pactual| > 5mbar$$

If the answer to test S11 is "yes", it is concluded that there is no leak (i.e. the fuel system is sealed).

On the other hand, if the answer to test S11 is "no", the FSCU 9 may perform (at step S12) the following temperature-based test (given as an example for illustrative purpose):

$$|Tactual - Tstart| > 2°C$$

If the answer to test S12 is "yes", it is concluded that there is a leak in the fuel system. Then, the FSCU 9 sends a signal of positive leak detection to the CCU 10, and the CCU 10 activates the MIL 12.

On the other hand, if the answer to test S12 is "no", the FSCU 9 checks (at step S16) whether there is a vehicle shut-down event (i.e. key off). If no vehicle shut-down event is detected, energy is further added in the fuel system and the FSCU 9 performs again step S10 (described above). On the other hand, if a vehicle shut-down event is detected, it is concluded that the leak test is non valid.

Referring back to test S7, if the answer to test S7 is "no"; i.e. if the value of the fuel tank pressure Pstart is, for example, greater than or equal to +15mbar, or lower than or equal to -15mbar, it is concluded that there is no leak (i.e. the fuel system is sealed).

According to the invention, the FSCU 9 may advantageously perform a step S13 which consists in calibrating the natural leakage rate by use of the fuel tank pressure Pend and temperature Tend measured at vehicle shut-down, and the fuel tank pressure Pstart and temperature Tstart measured at vehicle start-up. In a particular embodiment, the calibrated natural leakage rate can be calculated by using a predetermined analytic equation.

The volatility of the fuel reduces slowly during long storage times, but will mainly change after a refueling event. According to the invention, the FSCU 9 may advantageously perform a step S15 which consists in calibrating the RVP by using Equation (1) described above. However, this RVP recalibration can only be done if the following conditions are met:

- a significant temperature change has occurred since the start of the vehicle (typically 5°C); and
- no purge event has disturbed the internal tank pressure since the start of the vehicle.

In a particular embodiment, the FSCU 9 may calculate the calibrated RVP by implementing the method for calculating RVP after a refueling event described in the patent document US 20090114288 in the name of the applicant.

After RVP calibration, the algorithm is stopped until the next occasion of a vehicle shut down.

Although the invention has been disclosed by means of a limited number of embodiments, this was done to illustrate the invention, and not to limit its scope. The skilled person shall understand that features described in connection with specific embodiments may be combined with features from other embodiments to achieve the corresponding effects and advantages.

**Claims**

1. Method for detecting a presence or absence of a leak in a fuel system mounted on board of a vehicle, the method comprising the steps of:

    a) obtaining (S1,S6) temperatures and pressures in the fuel system at a first time and at a second later time;
    b) calculating (S8) a pressure (Ppredicted) expected in the fuel system at the second time, on the basis of at least one of the temperatures and pressures obtained at the first and second times, and a coefficient that represents the natural evolution of pressure in the fuel system over time;
    c) detecting (S9) a leak by comparing the calculated expected pressure and the pressure (Pstart) obtained at the second time to at least one predetermined threshold.

2. Method according to claim 1, wherein the coefficient is set as a function of at least one of the following data:

    - a natural leakage rate;
    - a Reid Vapor Pressure value;
    - an atmospheric pressure value.

3. Method according to any of claims 1 and 2, wherein step b) is performed when the value of the pressure (Pstart) at the second time lies inside a first predetermined range of pressure values, and wherein step c) consists in detecting whether the value of the calculated expected pressure lies outside a second predetermined range of pressure values.

4. Method according to claim 3, wherein it comprises a step of detecting an absence of a leak when the value of the pressure (Pstart) at the second time lies outside the first predetermined range of pressure values.

5. Method according to claim 4, wherein, when it is detected an absence of a leak, the method comprises a step of calibrating (S13) the natural leak rate by use of said temperatures and pressures at the first and second times.

6. Method according to any of claims 3 to 5, wherein when the value of the calculated expected pressure lies inside the second predetermined range of pressure values, the method comprises the steps of:

    - adding energy (S10) into the fuel system;
    - selecting a first pressure and/or a first temperature from among a first plurality of pressures and/or temperatures, as a function of a first predetermined condition relative to a variation of pressure and/or temperature;
    - selecting a second pressure and/or a second temperature from among the first plurality of pressures and/or temperatures, as a function of the first predetermined condition;
    - comparing (S11,S12) the first and second pressures and/or temperatures to determine whether there is a leak.

7. Method according to claim 6, wherein energy is added by using means already present on board the vehicle for other purposes.

8. Method according to claim 6, wherein energy is added by using an electrically powered heater.

9. Method according to claim 4 or 6, wherein, when it is detected an absence of a leak, the method comprises the steps of:

    - detecting (S14) predetermined operating condition(s) of the fuel system;
    - selecting a third pressure and/or a third temperature from among a second plurality of pressures and/or temperatures, as a function of a second predetermined condition relative to a variation of pressure and/or temperature;
    - selecting a fourth pressure and/or a fourth temperature from among the second plurality of pressures and/or temperatures, as a function of the second predetermined condition;
    - calibrating (S15) the Reid Vapor Pressure value by use of:

        o the third and fourth pressures and/or temperature(s); and
        o a data relative to the vehicle fuel consumption.

10. Method according to any of claims 1 to 9, wherein the first time is at an occasion of vehicle shut down and the second time is the next occasion of vehicle start-up.

11. Fuel system comprising a fuel tank (1), a temperature sensor, a pressure sensor (6) and a processor (9); said temperature sensor and said pressure sensor being arranged to measure conditions inside said fuel tank and being operatively connected to said processor; wherein said processor is configured to carry out the method according to any of claims 1 to 10.

12. The fuel system according to claim 11, further comprising an ECU, said processor being comprised in said ECU.

13. A motor vehicle comprising a fuel system according to claim 11 or claim 12.

14. A computer program for use in a fuel system according to claim 11 or claim 12, comprising a set of instructions executable by a processor for implementing the method according to any of claims 1 to 10.

Figure 1

Vehicle shut-down
Measure Pend and Tend ~ S1

Store in buffer:
Pend and Tend ~ S2

Wait for vehicle
start-up ~ S3

Vehicle starts and
Measure Fuel level and T° ambient ~ S4

Fuel level < 85% of nominal
AND
35°C > T° ambient > 4.4°C ~ S5

END ← No

Yes

Measure Pstart and Tstart ~ S6

S13 Calibrating Natural
Leakage Rate ← No — $-15mbar < Pstart < +15mbar$ ~ S7

NO LEAK

Yes S8

S14 ~ Check predetermined
conditions

Calculate Ppredicted

Ppredicted = f (Tstart, Pend, Tend, KEY OFF duration, Natural Leak Rate, RVP)

S15 ~ Calibrating RVP

END ~ S9

$|Ppredicted| > 18mbar$ — Yes → LEAK

No S10 S16

Adding energy in fuel
system ← No — Vehicle
shut-down — Yes

No NO VALID
TEST

S11

$|Pstart - Pactual| > 5mbar$ — No — $|Tactual - Tstart| > 2°C$ — Yes

No

Yes S12

NO LEAK

**FIGURE 2**

| (L) | $a_1$ | $b_1$ |
|---|---|---|
| 5 | 5,9422 | -4,0266 |
| 7 | 4,815 | -2,4656 |
| 10 | 4,2606 | -1,7201 |
| 12,5 | 4,0764 | -1,5164 |
| 15 | 3,9713 | -1,4324 |
| 20 | 3,8636 | -1,4498 |
| 27,5 | 3,8224 | -1,8718 |
| 35 | 3,9367 | -3,5489 |

# FIGURE 3

Europäisches
Patentamt

European
Patent Office

Office européen
des brevets

# EUROPEAN SEARCH REPORT

Application Number

EP 12 16 9557

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 321 727 B1 (REDDY SAM RAGHUMA [US] ET AL) 27 November 2001 (2001-11-27) | 1-3, 10-14 | INV.<br>F02D41/00<br>F02M25/08<br>B60K15/035<br>F01P5/02 |
| Y | * abstract *<br>* figures 1,2 *<br>* column 1, line 10 - line 25 *<br>* column 4, line 13 - line 24 *<br>* column 8, line 10 - line 21 *<br>----- | 4-9 | |
| X | EP 2 014 904 A2 (GM GLOBAL TECH OPERATIONS INC [US]) 14 January 2009 (2009-01-14) | 1-3, 10-14 | |
| Y | * abstract *<br>* paragraph [0009] *<br>* paragraph [0040] - paragraph [0043] *<br>* figures 1,2 *<br>----- | 4-9 | |
| Y | US 5 419 299 A (FUKASAWA OSAMU [JP] ET AL) 30 May 1995 (1995-05-30)<br>* abstract *<br>* figures 1-3,6-8 *<br>* column 2, line 5 - column 14 *<br>* column 6, line 7 - line 34 *<br>* column 8, line 18 - line 56 *<br>* column 12, line 6 - line 41 *<br>----- | 4-9 | TECHNICAL FIELDS SEARCHED (IPC)<br><br>F02D<br>F02M<br>B60K<br>F01P |
| A | WO 01/69073 A1 (BOSCH GMBH ROBERT [DE]; STREIB MARTIN [DE]) 20 September 2001 (2001-09-20)<br>* abstract *<br>* page 7 - page 10 *<br>* figures 1,2 *<br>----- | 4-9 | |
| A | US 2003/074958 A1 (NAGASAKI KENJI [JP] ET AL) 24 April 2003 (2003-04-24)<br>* abstract *<br>* figures 1,11,12 *<br>* paragraph [0053] *<br>* paragraph [0070] - paragraph [0077] *<br>----- | 6-9 | |

The present search report has been drawn up for all claims

| Place of search | Date of completion of the search | Examiner |
|---|---|---|
| Munich | 28 September 2012 | Payr, Matthias |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

**ANNEX TO THE EUROPEAN SEARCH REPORT
ON EUROPEAN PATENT APPLICATION NO.**

EP 12 16 9557

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2012

| Patent document cited in search report | | | Publication date | Patent family member(s) | | | Publication date |
|---|---|---|---|---|---|---|---|
| US 6321727 | B1 | | 27-11-2001 | NONE | | | |
| EP 2014904 | A2 | | 14-01-2009 | CN | 101344054 | A | 14-01-2009 |
| | | | | EP | 2014904 | A2 | 14-01-2009 |
| | | | | KR | 20090007247 | A | 16-01-2009 |
| | | | | US | 7448367 | B1 | 11-11-2008 |
| US 5419299 | A | | 30-05-1995 | JP | 3252494 | B2 | 04-02-2002 |
| | | | | JP | 6159160 | A | 07-06-1994 |
| | | | | US | 5419299 | A | 30-05-1995 |
| WO 0169073 | A1 | | 20-09-2001 | DE | 10013347 | A1 | 11-10-2001 |
| | | | | EP | 1269005 | A1 | 02-01-2003 |
| | | | | JP | 2003527589 | A | 16-09-2003 |
| | | | | US | 2003136182 | A1 | 24-07-2003 |
| | | | | WO | 0169073 | A1 | 20-09-2001 |
| US 2003074958 | A1 | | 24-04-2003 | NONE | | | |

EPO FORM P0459

For more details about this annex : see Official Journal of the European Patent Office, No. 12/82

## REFERENCES CITED IN THE DESCRIPTION

**Patent documents cited in the description**

- US 7448367 B

- US 20090114288 A